# EUROPÄISCHE PATENTSCHRIFT

(11) **EP 3 323 529 B1**
(45) Veröffentlichungstag und Bekanntmachung des Hinweises auf die Patenterteilung: **16.10.2019**
(21) Anmeldenummer: 17197999.0
(22) Anmeldetag: 24.10.2017
(51) Int. Cl.: B22D 11/14, B22D 11/12, B22D 11/128, B29C 64/135, B29C 64/20

(54) **STRANGGIESSANLAGE MIT FLEXIBLER KONFIGURATION DER RICHTSTRECKE**
CONTINUOUS CASTING PLANT WITH FLEXIBLE CONFIGURATION OF ALIGNMENT
INSTALLATION DE COULÉE CONTINUE À CONFIGURATION FLEXIBLE DE LA LIGNE DE DRESSAGE

(30) Priorität: 22.11.2016 AT 502472016
(43) Veröffentlichungstag der Anmeldung: 23.05.2018
(73) Patentinhaber: Primetals Technologies Austria GmbH, 4031 Linz (AT)
(72) Erfinder: Holzer, Karl, 3350 Haag (AT); Hrazdera, Gerald, 4484 Kronstorf (AT); Simon, Reinhard, 4020 Linz (AT); Wimmer, Franz, 4752 Riedau (AT)
(74) Vertreter: Metals@Linz

(56) Entgegenhaltungen:
- WO-A1-2009/144107
- DE-B- 1 290 666

## Beschreibung

### Gebiet der Technik

Die vorliegende Erfindung geht aus von einem Betriebsverfahren für eine Stranggießanlage,
- wobei mittels einer Anzahl von Stranggießkokillen eine entsprechende Anzahl von Metallsträngen gegossen wird,
- wobei die Metallstränge im wesentlichen vertikal nach unten aus der jeweiligen Stranggießkokille ausgezogen und über eine jeweilige Bogenführung einer Richtstrecke zugeführt werden,
- wobei die Metallstränge in der Richtstrecke eine Anzahl von Treibrichtern durchlaufen,
- wobei die Treibrichter in einem Traggerüst angeordnet sind, das in Transportrichtung der Metallstränge gesehen pro Metallstrang jeweils eine Anzahl von hintereinander angeordneten Aufnahmen für je einen Treibrichter aufweist.

Die vorliegende Erfindung geht weiterhin aus von einer Richtstrecke für eine Stranggießanlage, mittels derer eine Anzahl von Metallsträngen gegossen wird,
- wobei die Richtstrecke eine Anzahl von Treibrichtern aufweist, die dazu ausgebildet sind, von den Metallsträngen nach dem Austreten aus einer jeweiligen Bogenführung der Stranggießanlage durchlaufen zu werden,
- wobei die Richtstrecke ein Traggerüst aufweist, in dem die Treibrichter angeordnet sind,
- wobei das Traggerüst in Transportrichtung der Metallstränge gesehen pro Metallstrang jeweils eine Anzahl von hintereinander angeordneten Aufnahmen für je einen Treibrichter aufweist.

Die vorliegende Erfindung geht weiterhin aus von einer Stranggießanlage,
- wobei die Stranggießanlage eine Anzahl von Stranggießkokillen aufweist, mittels derer eine entsprechende Anzahl von Metallsträngen gegossen wird,
- die Stranggießanlage eine entsprechende Anzahl von Bogenführungen aufweist, mittels derer die Metallstränge im wesentlichen vertikal nach unten aus der jeweiligen Stranggießkokille ausgezogen werden,
- wobei die Stranggießanlage eine den Bogenführungen nachgeordnete derartige Richtstrecke aufweist, der die Metallstränge von den Bogenführungen zugeführt werden.

### Stand der Technik

Die genannten Gegenstände sind beispielsweise aus der WO 2009/144 107 A1 bekannt.

Aus der DE 1 290 666 B ist ein Betriebsverfahren für eine Stranggießanlage bekannt, wobei mittels einer Stranggießkokille ein Metallstrang gegossen wird. Der Metallstrang wird im wesentlichen vertikal nach unten aus der Stranggießkokille ausgezogen und über eine Bogenführung einer Richtstrecke zugeführt. In der Richtstrecke durchläuft der Metallstrang eine Anzahl von Treibrichtern.

Beim Stranggießen von Metall tritt der gegossene Metallstrang in der Regel vertikal oder nahezu vertikal aus der Stranggießkokille (z.B. aus einer geraden oder einer bogenförmigen Stranggießkokille) aus. Der gegossene Metallstrang, der in der Regel noch einen flüssigen Kern aufweist, wird sodann in einer Bogenführung intensiv gekühlt und weiterhin nach und nach umgelenkt, so dass er mit einem relativ geringen Winkel zur Horizontalen aus der Bogenführung austritt. Der Bogenführung ist eine Richtstrecke nachgeordnet, in der der gegossene Metallstrang gerade gerichtet wird, so dass er horizontal aus der Richtstrecke austritt. Hinter der Richtstrecke wird der gegossene Metallstrang abgelängt oder direkt einem Walzwerk zur Weiterverarbeitung zugeführt.

Das Richten des Metallstranges in der Richtstrecke sollte aus metallurgischen Gründen vorzugsweise in einem bestimmten Temperaturbereich des Metallstranges erfolgen. Die Temperatur, mit welcher der Metallstrang in die Richtstrecke eintritt, und die Temperatur, mit welcher der Metallstrang aus der Richtstrecke austritt, sind von der Gießgeschwindigkeit abhängig. Um ein Richten des Metallstrangs in dem bestimmten Temperaturbereich zu gewährleisten, sollte die Gießgeschwindigkeit daher in einem entsprechenden Bereich liegen.

In manchen Fällen - beispielsweise beim Gießen deutlich verschiedener Stahlgüten - kann es erforderlich sein, die Gießgeschwindigkeit in erheblichem Umfang zu variieren. Eine Stahlsorte kann mit einer relativ großen Gießgeschwindigkeit gegossen werden, eine andere Stahlsorte nur mit einer relativ kleinen Gießgeschwindigkeit. Je nach Gießgeschwindigkeit und je nach gegossenem Querschnitt variiert die Lage der Sumpf spitze des gegossenen Metallstrangs. Insbesondere variiert damit innerhalb der Stranggießanlage der Bereich, in dem eine Liquid Core Reduction (kurz LCR, d.h. eine Querschnittsreduzierung bei noch flüssigem Kern des jeweiligen Metallstrangs), eine Softreduction (d.h. eine Querschnittsreduzierung bei teigigem bzw. sumpfigem Kern des jeweiligen Metallstrangs, insbesondere im Bereich der Sumpfspitze) oder eine Hardreduction (d.h. eine Querschnittsreduzierung nach der Durcherstarrung des jeweiligen Metallstrangs) erfolgen kann.

Je länger die Richtstrecke ist und hiermit verbunden je größer die Anzahl an Treibrichtern ist, desto größer ist der für die Gießgeschwindigkeit zulässige Geschwindigkeitsbereich, um innerhalb der Richtstrecke eine Querschnittsreduzierung - insbesondere eine LCR oder Softreduction - durchführen zu können. Je länger die Richtstrecke ist und hiermit verbunden je größer die Anzahl an Treibrichtern ist, desto größer sind jedoch sowohl die Investitionskosten als auch die Betriebskosten der Richtstrecke.

### Zusammenfassung der Erfindung

Die Aufgabe der vorliegenden Erfindung besteht darin, Möglichkeiten zu schaffen, den Geschwindigkeitsbereich für die Gießgeschwindigkeit zu maximieren, ohne die Investitionskosten und die Betriebskosten der Richtstrecke nennenswert zu erhöhen.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 9.

Erfindungsgemäß wird ein Betriebsverfahren der eingangs genannten Art dadurch ausgestaltet, dass pro Metallstrang entweder in einer Anzahl von vorderen Aufnahmen, deren vorderste an die jeweilige Bogenführung angrenzt, oder in einer Anzahl von hinteren Aufnahmen, die am weitesten von der jeweiligen Bogenführung entfernt sind, kein Treibrichter angeordnet wird und nur in den verbleibenden Aufnahmen jeweils ein Treibrichter angeordnet wird.

Aufgrund dieser Maßnahme können bei einer hohen Gießgeschwindigkeit in den von der jeweiligen Bogenführung am weitesten entfernten Aufnahmen Treibrichter angeordnet werden, so dass eine Querschnittreduktion in einem hinteren Bereich der Richtstrecke erfolgen kann. Umgekehrt können bei einer niedrigen Gießgeschwindigkeit in den an die jeweilige Bogenführung angrenzenden Aufnahmen Treibrichter angeordnet werden, so dass eine Querschnittreduktion in einem vorderen Bereich der Richtstrecke erfolgen kann.

Die Metallstränge können einen Brammenquerschnitt aufweisen. Alternativ können die Metallstränge einen Knüppelquerschnitt oder einen Vorblockquerschnitt (engl. bloom) aufweisen. Insbesondere in den letztgenannten Fällen kann die Anzahl an Metallsträngen größer als 1 sein. Weiters ist es möglich, dass die Metallstränge einen Vorprofilquerschnitt (z.B. als Doppel-T Vorprofil) aufweisen.

Vorzugsweise führt pro Metallstrang mindestens einer der Treibrichter eine Querschnitt- bzw. Dickenreduzierung des Metallstrangs durch. Die Querschnittreduzierung kann zu einem Zeitpunkt erfolgen, zu dem der jeweilige Metallstrang bereits vollständig durcherstarrt ist, also als sogenannte Hardreduction. Vorzugsweise handelt es sich jedoch um eine Liquid Core Reduction bzw. eine Softreduction. Die anderen Treibrichter, welche keine Querschnittreduzierung des Metallstrangs durchführen, Treiben ggf. den Strang an, Stützen und Führen den Strang und reduzieren so das "Ausbauchen" (engl. bulging) des Strangs bzw. Richten ggf. den Strang gerade. Dazu werden die Strangführungsrollen dieser Treibrichter entweder positionsgesteuert oder -geregelt an den Strang angestellt oder sie werden mit einer bestimmten Anstellkraft (z.B. durch eine Steuerung oder Regelung der Anstellkraft) an den Strang angestellt.

Im praktischen Betrieb der Stranggießanlage hat es sich als vorteilhaft herausgestellt, wenn die Erstarrung des Metallstrangs inkl. der momentanen Lage der Sumpfspitze des Metallstrangs während des laufenden Betriebs der Stranggießanlage durch ein mathematisches Modell, vorzugsweise in Echtzeit, mitberechnet wird (siehe z.B. WO2009/153101) und die Treibrichter unter Berücksichtigung der Lage der sog. Sumpfspitze und eventuell der natürlichen Schrumpfung des Metallstrangs an den Metallstrang angestellt werden. Ist eine Querschnitts- bzw. Dickenreduktion des Metallstrangs gewünscht, so wird diese von zumindest einem Treibrichter durchgeführt. Oftmals erfolgt dies kurz vor der vollständigen Durcherstarrung des Metallstrangs, sodass die aktuelle Lage der Sumpfspitze entscheidend ist, welcher Treibrichter aus der Vielzahl von Treibrichtern positionsgeregelt oder -gesteuert an den Metallstrang angestellt wird, sodass dieser bei flüssigem oder teigigem Kern dickenreduziert wird.

Somit ist es vorteilhaft, dass die Erstarrung des Metallstrangs und die Lage einer Sumpfspitze des Metallstrangs während des laufenden Betriebs der Stranggießanlage durch ein mathematisches Modell berechnet werden. Aus der Lage der Sumpfspitze kann jener bzw. können jene Treibrichter ausgewählt werden, der bzw. die eine Querschnittsreduktion des Metallstrangs durchführt bzw. durchführen.

Außerdem ist es vorteilhaft, dass der mindestens eine Treibrichter unter Berücksichtigung der Lage der Sumpfspitze aus der Anzahl der Treibrichter ausgewählt wird, vorzugsweise positionsgeregelt, an den Metallstrang angestellt wird und eine Querschnittreduzierung, insbesondere eine Liquid Core Reduction oder Softreduction, des Metallstrangs durchführt.

Prinzipiell ist es möglich, dass pro Metallstrang die Anzahl an Aufnahmen, in denen kein Treibrichter angeordnet wird, größer als 1 ist. In der Regel ist die Anzahl jedoch gleich 1.

Da bei einer Erhöhung der Gießgeschwindigkeit typischerweise die Sumpfspitze in Gießrichtung nach hinten, d.h. in Richtung des horizontalen Auslaufbereichs der Stranggießanlage, wandert, ist es günstig, dass vor einer Erhöhung der Gießgeschwindigkeit ein Treibrichter aus einer der vorderen Aufnahmen entnommen wird und in eine der hinteren Aufnahmen eingesetzt wird. Besonders vorteilhaft ist es, wenn der vorderste Treibrichter aus einer der vorderen Aufnahmen entnommen wird und unmittelbar nach dem hintersten Treibrichter in eine der hinteren Aufnahmen eingesetzt wird.

Da bei einer Reduktion der Gießgeschwindigkeit typischerweise die Sumpfspitze in Gießrichtung nach vorne, d.h. in Richtung der Bogenführung der Stranggießanlage, wandert, ist es günstig, dass vor einer Reduktion der Gießgeschwindigkeit ein Treibrichter aus einer der hinteren Aufnahmen entnommen wird und in eine der vorderen Aufnahmen eingesetzt wird. Besonders vorteilhaft ist es, wenn der hinterste Treibrichter aus einer der hinteren Aufnahmen entnommen wird und unmittelbar vor dem vordersten Treibrichter in eine der vorderen Aufnahmen eingesetzt wird.

Die Aufgabe wird weiterhin durch eine Richtstrecke mit den Merkmalen des Anspruchs 10 gelöst. Vorteilhafte Ausgestaltungen der Richtstrecke sind Gegenstand der abhängigen Ansprüche 10 bis 14.

Erfindungsgemäß wird eine Richtstrecke der eingangs genannten Art dadurch ausgestaltet, dass in einem betriebsbereiten Zustand der Richtstrecke pro Metallstrang entweder in einer Anzahl von vorderen Aufnahmen, deren vorderste an die jeweilige Bogenführung angrenzt, oder in einer Anzahl von hinteren Aufnahmen, die am weitesten von der jeweiligen Bogenführung entfernt sind, kein Treibrichter angeordnet ist, in den verbleibenden Aufnahmen jedoch jeweils ein Treibrichter angeordnet ist.

Die vorteilhaften Ausgestaltungen der Richtstrecke korrespondieren im wesentlichen mit denen des Betriebsverfahrens.

Die Aufgabe wird weiterhin durch eine Stranggießanlage mit den Merkmalen des Anspruchs 15 gelöst. Erfindungsgemäß ist die Richtstrecke der Stranggießanlage erfindungsgemäß ausgebildet.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Stranggießanlage von der Seite gesehen,
- FIG 2: die Stranggießanlage von FIG 1 von oben gesehen,
- FIG 3: einen Schnitt längs einer Linie III-III in FIG 2,
- FIG 4: einen einzelnen Treibrichter,
- FIG 5: eine Richtstrecke von der Seite gesehene in einer ersten Konfiguration und
- FIG 6: die Richtstrecke von FIG 4 in einer zweiten Konfiguration.

### Beschreibung der Ausführungsformen

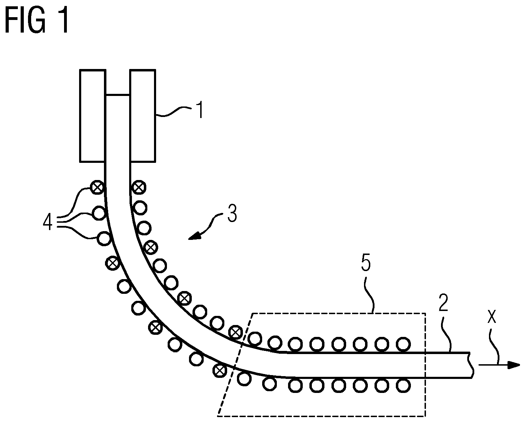

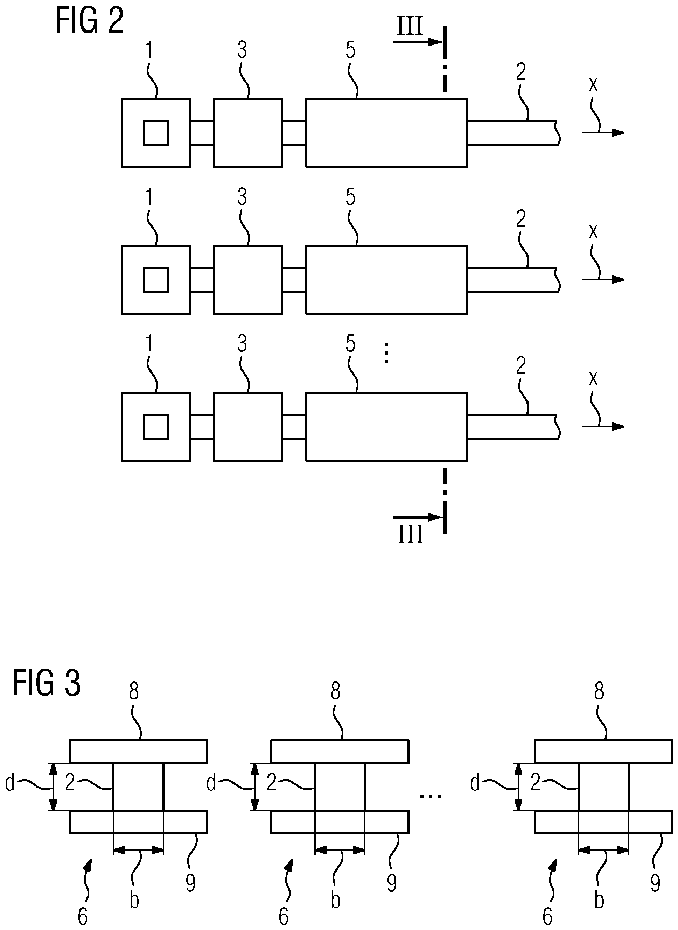

Gemäß den FIG 1 und 2 weist eine Stranggießanlage eine Anzahl von Stranggießkokillen 1 auf. Mittels der Stranggießkokillen 1 wird eine entsprechende Anzahl von Metallsträngen 2 gegossen. Die Anzahl an Stranggießkokillen 1 kann gleich 1 sein. Insbesondere in dem Fall, dass der Metallstrang 2 einen Brammenquerschnitt aufweist (d.h. dass die Breite b der Metallstränge 2 mindestens doppelt so groß wie die Dicke d der Metallstränge 2 ist), ist dies oftmals der Fall. Alternativ ist es entsprechend der Darstellung in den FIG 2 und 3 möglich, dass die Anzahl an Metallsträngen 2 größer als 1 ist. Diese Ausgestaltung ist insbesondere dann möglich, wenn die Metallstränge 2 einen Knüppel- oder einen Vorblockquerschnitt aufweisen. Sowohl bei einem Knüppel- als auch bei einem Vorblockquerschnitt liegt das Verhältnis von Breite b der Metallstränge 2 zu Dicke d der Metallstränge 2 oftmals im Bereich zwischen 0,8:1 und 1,25:1. Der Unterschied zwischen einem Knüppel- und einem Vorblockquerschnitt besteht darin, dass Knüppel in der Regel eine maximale Breite b und eine maximale Dicke d von 250 mm aufweisen, während sie bei einem Vorblockquerschnitt in der Regel bei mindestens 300 mm liegt. In derartigen Fällen - also bei einem Knüppelquerschnitt oder einem Vorblockquerschnitt - können bis zu 5 oder 6 Stranggießkokillen 1 nebeneinander angeordnet sein.

Die Stranggießanlage weist weiterhin für jede Stranggießkokille 1 eine jeweilige Bogenführung 3 auf. Die Bogenführungen 3 weisen jeweils eine Vielzahl von Strangführungsrollen 4 auf. Es ist möglich, dass die Strangführungsrollen 4 nicht angetrieben sind. Alternativ ist es möglich, dass von den Strangführungsrollen 4 zumindest einige angetrieben sind. Die angetriebenen Strangführungsrollen 4 sind in FIG 1 durch ein zusätzliches Kreuz in der jeweiligen Strangführungsrolle 4 von den nicht angetriebenen Strangführungsrollen 4 unterschieden. Falls einige der Strangführungsrollen 4 angetrieben sind, werden mittels dieser die Metallstränge 2 nach unten aus der jeweiligen Stranggießkokille 1 ausgezogen. Das Ausziehen erfolgt im wesentlichen vertikal (wenn die Stranggießkokille eine sog. "Bogenkokille" ist) oder sogar exakt vertikal (wenn die Stranggießkokille eine sog. "gerade Kokille" ist) nach unten. Somit werden die Metallstränge 2 durch angetriebene Strangführungsrollen 4 aus den jeweiligen Stranggießkokillen 1 ausgezogen. Alternativ kann das Ausziehen auch anderweitig (z.B. beim Gießstart der Stranggießanlage durch das Ausziehen des Kaltstrangs) erfolgen.

Über die Bogenführungen 3 werden die Metallstränge 2 einer Richtstrecke 5 zugeführt. Die Richtstrecke 5 ist somit den Bogenführungen 3 nachgeordnet. Eine Bogenführung 3 muss nicht notwendigerweise einen rechten Winkel einschließen, sondern kann auch einen spitzen Winkel (insbesondere einen Winkel im Bereich von 45 bis 90°) einschließen. Die Richtstrecke 5 richtet - selbstverständlich nach dem Austreten der Metallstränge 2 aus der jeweiligen Bogenführung 3 - die Metallstränge 2 gerade, so dass sie horizontal aus der Richtstrecke 5 auslaufen. Das Richten erfolgt in der Richtstrecke 5 mittels einer Anzahl von Treibrichtern 6.

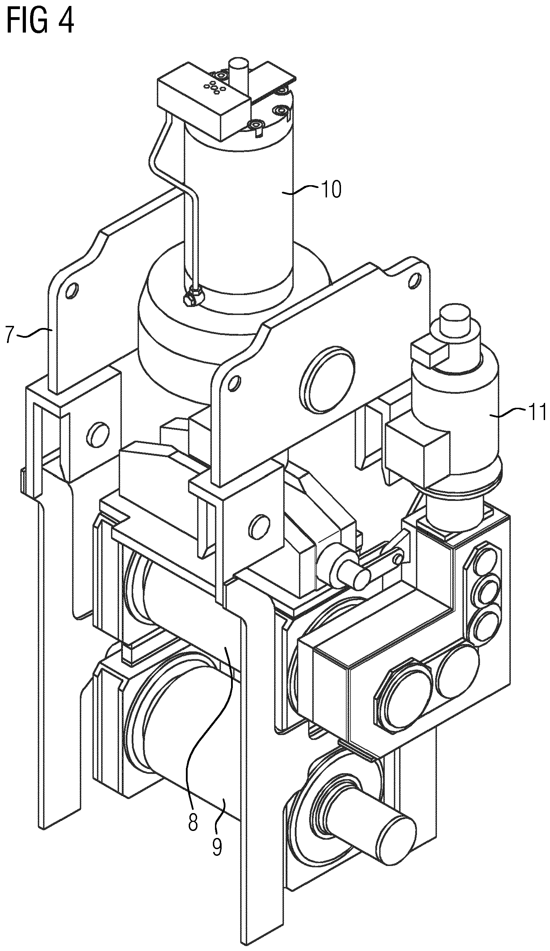

Die Treibrichter 6 umfassen gemäß FIG 4 jeweils eine mechanische Grundkonstruktion 7, in der eine obere Rolle 8 und eine untere Rolle 9 gelagert sind. Eine der Rollen 8, 9 - meist die obere Rolle 8 - ist an die andere Rolle 9, 8 anstellbar. Das entsprechende Anstellorgan 10 - beispielsweise eine Hydraulikzylindereinheit - ist ebenfalls an der mechanischen Grundkonstruktion 7 des jeweiligen Treibrichters 6 angeordnet. Weiterhin ist - zumindest in der Regel - Bestandteil des jeweiligen Treibrichters 6 ein Antrieb 11, mittels dessen (direkt oder über ein Getriebe) auf mindestens eine der Rollen 8, 9 - meist die obere Rolle 8 - ein Drehmoment ausgeübt werden kann. Die Treibrichter 6 umfassen weiterhin an der mechanischen Grundkonstruktion 7 Anschlüsse für Fluide und elektrische Energie zur Versorgung des Anstellorgans 10 und des Antriebs 11 sowie gegebenenfalls weiterer Elemente des jeweiligen Treibrichters 6 sowie Anschlüsse für Signalleitungen zu einer Sensorik (z.B. Kraftsensoren für die Anstellkraft bzw. Drucksensoren für das als Hydraulikzylinder ausgebildete Anstellorgan 10) und/oder einer Aktorik des jeweiligen Treibrichters 6. Die Treibrichter 6 können insbesondere so ausgebildet sein, wie dies in der bereits erwähnten WO 2009/ 144 107 A1 erläutert ist.

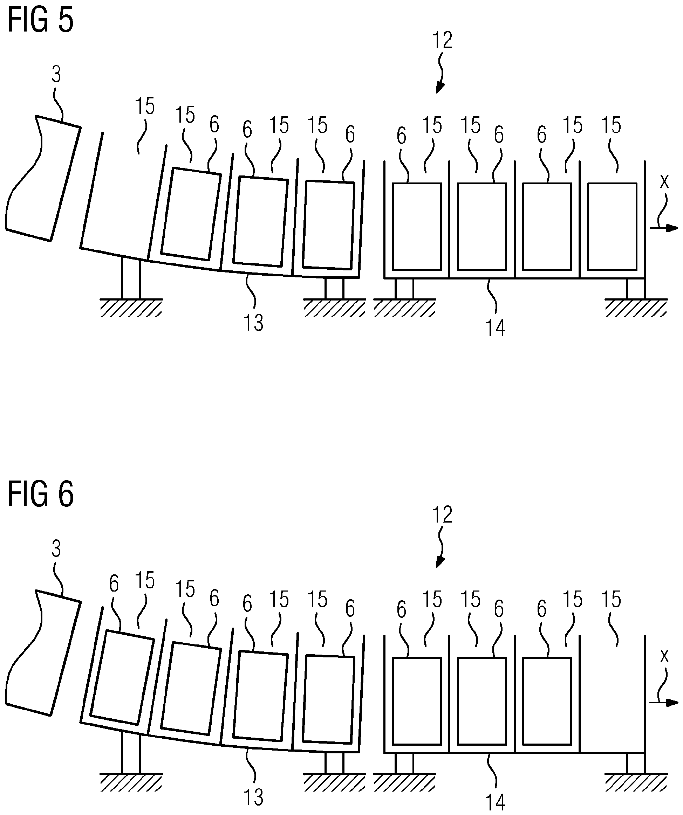

Die Richtstrecke 5 weist gemäß den FIG 5 und 6 ein Traggerüst 12 auf, in dem die Treibrichter 6 angeordnet sind. Das Traggerüst 12 besteht gemäß den FIG 5 und 6 aus einem vorderen Teil 13 und einem hinteren Teil 14, wobei beide Teile 13, 14 je vier Aufnahmen 15 für je einen einzelnen Treibrichter 6 aufweisen. Sowohl die Aufteilung des Traggerüsts 12 in mehrere Teile 13, 14 als auch die Anzahl an Aufnahmen 15 pro Teil 13, 14 als auch die Anzahl an Aufnahmen 15 insgesamt sind im Rahmen der vorliegenden Erfindung jedoch von untergeordneter Bedeutung. Entscheidend ist, dass das Traggerüst 12 in Transportrichtung x der Metallstränge 2 gesehen pro Metallstrang 2 jeweils eine Anzahl - in der Regel mindestens sechs - von hintereinander angeordneten Aufnahmen 15 für je einen einzelnen der Treibrichter 6 aufweist. Insbesondere kann die Anzahl an hintereinander angeordneten Aufnahmen 15 nach Bedarf auch größer als acht sein, beispielsweise neun, zehn oder elf betragen.

Erfindungsgemäß ist - und dies gilt für einen betriebsbereiten Zustand der Richtstrecke 6, wenn diese also in der Lage ist, die Metallstränge 2 zu richten - pro Metallstrang 2 entweder entsprechend der Darstellung in FIG 5 in einer Anzahl von vorderen Aufnahmen 15 oder entsprechend der Darstellung in FIG 6 in einer Anzahl von hinteren Aufnahmen 15 kein Treibrichter angeordnet. Lediglich in den verbleibenden Aufnahmen 15 ist jeweils ein Treibrichter 6 angeordnet. Die vorderen Aufnahmen 15 sind diejenigen Aufnahmen 15, die an die jeweilige Bogenführung 3 angrenzen, und die in Transportrichtung x unmittelbar nachfolgenden Aufnahmen 15. Die hinteren Aufnahmen 15 sind diejenigen Aufnahmen 15, die am weitesten von der Bogenführung 3 entfernt sind, und die in Transportrichtung x unmittelbar vorhergehenden Aufnahmen 15.

Die Treibrichter 6 sind in den Aufnahmen 15 lösbar befestigt. Beispielsweise können sie so befestigt sein, wie dies in der WO 2007/144 107 A1 erläutert ist. Unabhängig von der Art der Befestigung ist es jedoch möglich, die Treibrichter 6 aus den Aufnahmen 15 zu entfernen. Die Treibrichter 6 sind weiterhin untereinander in der Regel gleich aufgebaut. Es ist daher insbesondere möglich, durch Entfernen der Treibrichter 6 aus dem vorderen Aufnahmen 15 und Einsetzen der entfernten Treibrichter 6 in die hinteren Aufnahmen 15 die Richtstrecke 5 entsprechend umzurüsten. Analog ist natürlich auch die umgekehrte Vorgehensweise möglich.

In der Regel ist es ausreichend, wenn pro Metallstrang 2 die Anzahl an Aufnahmen 15, in denen kein Treibrichter 6 angeordnet ist, gleich 1 ist. In diesem Fall ist also entweder die vorderste Aufnahme 15 oder die hinterste Aufnahme 15 leer, d.h. in ihr ist kein Treibrichter 6 angeordnet. Alternativ könnte die Anzahl an Aufnahmen 15, in denen kein Treibrichter 6 angeordnet ist, größer als 1 sein. Wenn beispielsweise die Anzahl gleich 2 ist, wären also entweder die vorderste Aufnahme 15 und die an die vorderste Aufnahme 15 angrenzende Aufnahme 15 oder die hinterste Aufnahme 15 und die an die hinterste Aufnahme 15 angrenzende Aufnahme 15 leer.

Es ist möglich, dass die Treibrichter 6 die Metallstränge 2 lediglich treiben und hierbei gerade richten. In vielen Fällen ist es jedoch von Vorteil, wenn entsprechend der Darstellung in den FIG 5 und 6 pro Metallstrang 2 mindestens einer der Treibrichter 6 eine Querschnittreduzierung des Metallstrangs 2 durchführt. Hierbei ist es je nach Bedarf möglich, dass pro Metallstrang 2 nur einer der Treibrichter 6 oder mehrere Treibrichter 6 - gegebenenfalls sogar alle Treibrichter 6 - eine Querschnittreduzierung - im konkreten Fall eine Reduzierung der Dicke d - des jeweiligen Metallstrangs 2 durchführen. In der Regel erfolgt die Querschnittsreduzierung in denjenigen Treibrichtern 6, die von dem jeweiligen Metallstrang 2 zuerst durchlaufen werden. Bei der Querschnittsreduzierung kann es sich um eine Hardreduction oder um eine Liquid Core Reduction handeln. Vorzugsweise handelt es sich jedoch um eine Softreduction.

Bei einer Ausführungsform wird die Lage der Sumpfspitze im Metallstrang 2 durch ein mathematisches Modell, vorzugsweise in Echtzeit, mitberechnet (siehe z.B. WO2009/153101). Das Modell berücksichtigt die Gießgeschwindigkeit sowie die Kühlintensitäten in der Stranggießkokille 1 und in der Sekundärkühlung in der Strangführung 3.

Wird die Gießgeschwindigkeit, z.B. aufgrund einer Änderung der Stahlgüte, reduziert oder einer der Kühlintensitäten erhöht, so wandert die Sumpfspitze entgegen der Gießrichtung. In diesem Fall kann es äußerst vorteilhaft sein, wenn der letzte Treibrichter aus dem hinteren Teil 14 des Traggerüsts 12 demontiert wird und in die erste Aufnahme 15 in den vorderen Teil 13 des Traggerüsts 12 eingesetzt wird (siehe den Ausgangszustand in Fig 5 und den Endzustand in Fig 6). Wird hingegen die Gießgeschwindigkeit erhöht oder einer der Kühlintensitäten reduziert, so wandert die Sumpfspitze in Gießrichtung. In diesem Fall kann es äußerst vorteilhaft sein, wenn der erste Treibrichter 6 aus dem vorderem Teil 13 des Traggerüsts 12 demontiert wird und in die letzte Aufnahme 15 in den hinteren Teil 14 des Traggerüsts 12 eingesetzt wird (siehe den Ausgangszustand in Fig 5 und den Endzustand in Fig 5). Verschiebt sich hingegen die Lage der Sumpfspitze nur geringfügig, so kann es ausreichen, einen anderen Treibrichter 6 derart anzusteuern, dass er den Querschnitt des Metallstrangs 2 reduziert.

Wenn, wie obenstehend erläutert, die Anzahl an Metallsträngen 2 größer als 1 ist, weist das Traggerüst 12 nicht nur in Transportrichtung x gesehen hintereinander, sondern auch quer zur Transportrichtung x gesehen nebeneinander mehrere Aufnahmen 15 für je einen Treibrichter 6 auf. Die Anzahl an nebeneinander angeordneten Aufnahmen 15 stimmt in diesem Fall mit der Anzahl an Metallsträngen 2 überein.

Die vorliegende Erfindung weist viele Vorteile auf. Insbesondere ist es auf kostengünstige Weise möglich, den Bereich hinter den Bogenführungen 3, in dem die Metallstränge 2 die Treibrichter 6 durchlaufen, nach Bedarf näher zu den Bogenführungen 3 hin zu verlagern oder weiter von den Bogenführungen 3 weg zu verlagern.

Obwohl die Erfindung im Detail durch das bevorzugte Ausführungsbeispiel näher illustriert und beschrieben wurde, so ist die Erfindung nicht durch die offenbarten Beispiele eingeschränkt und andere Varianten können vom Fachmann hieraus abgeleitet werden, ohne den Schutzumfang der Erfindung zu verlassen.

### Bezugszeichenliste

- 1: Stranggießkokillen
- 2: Metallstränge
- 3: Bogenführungen
- 4: Strangführungsrollen
- 5: Richtstrecke
- 6: Treibrichter
- 7: mechanische Grundkonstruktion
- 8: obere Rolle
- 9: untere Rolle
- 10: Anstellorgan
- 11: Antrieb
- 12: Traggerüst
- 13: vorderer Teil
- 14: hinterer Teil
- 15: Aufnahmen

- b: Breite
- d: Dicke
- x: Transportrichtung

## Patentansprüche

1. Betriebsverfahren für eine Stranggießanlage,
- wobei mittels einer Anzahl von Stranggießkokillen (1) eine entsprechende Anzahl von Metallsträngen (2) gegossen wird,
- wobei die Metallstränge (2) im wesentlichen vertikal nach unten aus der jeweiligen Stranggießkokille (1) ausgezogen und über eine jeweilige Bogenführung (3) einer Richtstrecke (5) zugeführt werden,
- wobei die Metallstränge (2) in der Richtstrecke (5) eine Anzahl von Treibrichtern (6) durchlaufen,
- wobei die Treibrichter (6) in einem Traggerüst (12) angeordnet sind, das in Transportrichtung (x) der Metallstränge (2) gesehen pro Metallstrang (2) jeweils eine Anzahl von hintereinander angeordneten Aufnahmen (15) für je einen Treibrichter (6) aufweist,
**dadurch gekennzeichnet,**
**dass** pro Metallstrang (2) entweder in einer Anzahl von vorderen Aufnahmen (15), deren vorderste an die jeweilige Bogenführung (3) angrenzt, oder in einer Anzahl von hinteren Aufnahmen (15), die am weitesten von der jeweiligen Bogenführung (3) entfernt sind, kein Treibrichter angeordnet wird und nur in den verbleibenden Aufnahmen (15) jeweils ein Treibrichter (6) angeordnet wird.

2. Betriebsverfahren nach Anspruch 1,
**dadurch gekennzeichnet,**
**dass** die Metallstränge (2) einen Knüppelquerschnitt oder einen Vorblockquerschnitt aufweisen.

3. Betriebsverfahren nach Anspruch 1 oder 2,
**dadurch gekennzeichnet,**
**dass** die Anzahl an Metallsträngen (2) größer als 1 ist.

4. Betriebsverfahren nach einem der Ansprüche 1 bis 3,
**dadurch gekennzeichnet,**
**dass** die Erstarrung des Metallstrangs (2) und die Lage einer Sumpfspitze des Metallstrangs (2) während des laufenden Betriebs der Stranggießanlage durch ein mathematisches Modell berechnet werden.

5. Betriebsverfahren nach einem der Ansprüche 1 bis 4,
**dadurch gekennzeichnet,**
**dass** pro Metallstrang (2) mindestens einer der Treibrichter (6) eine Querschnittreduzierung des Metallstrangs (2) durchführt, insbesondere eine Softreduction.

6. Betriebsverfahren nach Anspruch 5,
**dadurch gekennzeichnet,**
**dass** der mindestens eine Treibrichter (6) unter Berücksichtigung der Lage der Sumpfspitze aus der Anzahl der Treibrichter (6) ausgewählt wird, vorzugsweise positionsgeregelt, an den Metallstrang (2)angestellt wird und eine Querschnittreduzierung, insbesondere eine Liquid Core Reduction oder Softreduction, des Metallstrangs (2) durchführt.

7. Betriebsverfahren nach einem der obigen Ansprüche,
**dadurch gekennzeichnet,**
**dass** pro Metallstrang (2) die Anzahl an Aufnahmen (15), in denen kein Treibrichter angeordnet wird, gleich 1 ist.

8. Betriebsverfahren nach einem der obigen Ansprüche,
**dadurch gekennzeichnet,**
**dass** vor einer Erhöhung einer Gießgeschwindigkeit ein Treibrichter (6) aus einer der vorderen Aufnahmen (15) entnommen wird und in eine der hinteren Aufnahmen (15) eingesetzt wird.

9. Betriebsverfahren nach einem der obigen Ansprüche,
**dadurch gekennzeichnet,**
**dass** vor einer Reduktion einer Gießgeschwindigkeit ein Treibrichter (6) aus einer der hinteren Aufnahmen (15) entnommen wird und in eine der vorderen Aufnahmen (15) eingesetzt wird.

10. Richtstrecke für eine Stranggießanlage, mittels derer eine Anzahl von Metallsträngen (2) gegossen wird,
- wobei die Richtstrecke eine Anzahl von Treibrichtern (6) aufweist, die dazu ausgebildet sind, von den Metallsträngen (2) nach dem Austreten aus einer jeweiligen Bogenführung (3) der Stranggießanlage durchlaufen zu werden,
- wobei die Richtstrecke ein Traggerüst (12) aufweist, in dem die Treibrichter (6) angeordnet sind,
- wobei das Traggerüst (12) in Transportrichtung (x) der Metallstränge (2) gesehen pro Metallstrang (2) jeweils eine Anzahl von hintereinander angeordneten Aufnahmen (15) für je einen Treibrichter (6) aufweist,
**dadurch gekennzeichnet,**
**dass** in einem betriebsbereiten Zustand der Richtstrecke pro Metallstrang (2) entweder in einer Anzahl von vorderen Aufnahmen (15), deren vorderste an die jeweilige Bogenführung (3) angrenzt, oder in einer Anzahl von hinteren Aufnahmen (15), die am weitesten von der jeweiligen Bogenführung (3) entfernt sind, kein Treibrichter angeordnet ist, in den verbleibenden Aufnahmen (15) jedoch jeweils ein Treibrichter (6) angeordnet ist.

11. Richtstrecke nach Anspruch 10,
**dadurch gekennzeichnet,**
**dass** die Richtstrecke dazu ausgebildet ist, von Metallsträngen (2) durchlaufen zu werden, die einen Knüppelquerschnitt oder einen Vorblockquerschnitt aufweisen.

12. Richtstrecke nach Anspruch 10 oder 11,
**dadurch gekennzeichnet,**
**dass** das Traggerüst (12) nebeneinander mehrere Aufnahmen (15) für je einen Treibrichter (6) aufweist, so dass mittels der Richtstrecke mehrere Metallstränge (2) gleichzeitig gerade gerichtet werden können.

13. Richtstrecke nach Anspruch 10 bis 12,
**dadurch gekennzeichnet,**
**dass** pro Metallstrang (2) mindestens einer der Treibrichter (6) dazu ausgebildet ist, eine Querschnittreduzierung des Metallstrangs (2) durchzuführen, insbesondere eine Softreduction.

14. Richtstrecke nach einem der Ansprüche 10 bis 13,
**dadurch gekennzeichnet,**
**dass** pro Metallstrang (2) die Anzahl an Aufnahmen (15), in denen kein Treibrichter angeordnet ist, gleich 1 ist.

15. Stranggießanlage,
- wobei die Stranggießanlage eine Anzahl von Stranggießkokillen (1) aufweist, mittels derer eine entsprechende Anzahl von Metallsträngen (2) gegossen wird,
- die Stranggießanlage eine entsprechende Anzahl von Bogenführungen (3) aufweist, mittels derer die Metallstränge (2) im wesentlichen vertikal nach unten aus der jeweiligen Stranggießkokille (1) ausgezogen werden,
- wobei die Stranggießanlage eine den Bogenführungen (3) nachgeordnete Richtstrecke (5) nach einem der Ansprüche 10 bis 14 aufweist, der die Metallstränge (2) von den Bogenführungen (3) zugeführt werden.

## Claims

1. Operating method for a continuous casting plant,
- wherein, by means of a number of continuous casting moulds (1), a corresponding number of metal strands (2) are cast,
- wherein the metal strands (2) are withdrawn substantially vertically downwards out of the respective continuous casting mould (1) and are fed via a respective curved guide (3) to a straightening zone (5),
- wherein in the straightening zone (5) the metal strands (2) run through a number of withdrawal and straightening units (6),
- wherein the withdrawal and straightening units (6) are arranged in a supporting framework (12), which has, seen in the transporting direction (x) of the metal strands (2), for each metal strand (2) a number of receptacles (15), arranged one behind the other, respectively for a withdrawal and straightening unit (6),
**characterized**
**in that**, for each metal strand (2), no withdrawal and straightening unit is arranged either in a number of forward receptacles (15), the forwardmost of which is adjacent to the respective curved guide (3), or in a number of rear receptacles (15), which are furthest away from the respective curved guide (3), and a withdrawal and straightening unit (6) is only respectively arranged in the remaining receptacles (15).

2. Operating method according to Claim 1,
**characterized in that** the metal strands (2) have the cross section of a billet or the cross section of a bloom.

3. Operating method according to Claim 1 or 2,
**characterized**
**in that** the number of metal strands (1) is greater than 1.

4. Operating method according to one of Claims 1 to 3,
**characterized**
**in that** the solidification of the metal strand (2) and the position of a lowest point of the liquid pool of the metal strand (2) are calculated by a mathematical model during the ongoing operation of the continuous casting plant.

5. Operating method according to one of Claims 1 to 4,
**characterized**
**in that**, for each metal strand (2), at least one of the withdrawal and straightening units (6) carries out a cross-sectional reduction of the metal strand (2), in particular a soft reduction.

6. Operating method according to Claim 5,
**characterized**
**in that**, while taking into account the position of the lowest point of the liquid pool, the at least one withdrawal and straightening unit (6) is selected from the number of the withdrawal and straightening units (6), is placed against the metal strand (2), preferably in a positionally controlled manner, and a cross-sectional reduction, in particular a liquid core reduction or soft reduction, of the metal strand (2) is carried out.

7. Operating method according to one of the above claims,
**characterized**
**in that**, for each metal strand (2), the number of receptacles (15) in which no withdrawal and straightening unit is arranged is equal to 1.

8. Operating method according to one of the above claims,
**characterized**
**in that**, before increasing a casting speed, a withdrawal and straightening unit (6) is removed from one of the forward receptacles (15) and inserted into one of the rear receptacles (15) .

9. Operating method according to one of the above claims,
**characterized**
**in that**, before reducing a casting speed, a withdrawal and straightening unit (6) is removed from one of the rear receptacles (15) and inserted into one of the forward receptacles (15).

10. Straightening zone for a continuous casting plant, by means of which a number of metal strands (2) are cast,
- wherein the straightening zone has a number of withdrawal and straightening units (6), which are designed to be run through by the metal strands (2) after leaving a respective curved guide (3) of the continuous casting plant,
- wherein the straightening zone has a supporting framework (12), in which the withdrawal and straightening units (6) are arranged,
- wherein the supporting framework (12) has, seen in the transporting direction (x) of the metal strands (2), for each metal strand (2) a number of receptacles (15), arranged one behind the other, respectively for a withdrawal and straightening unit (6),
**characterized**
**in that**, in an operationally ready state of the straightening zone, for each metal strand (2), no withdrawal and straightening unit is arranged either in a number of forward receptacles (15), the forwardmost of which is adjacent to the respective curved guide (3), or in a number of rear receptacles (15), which are furthest away from the respective curved guide (3), but a withdrawal and straightening unit (6) is respectively arranged in the remaining receptacles (15).

11. Straightening zone according to Claim 10,
**characterized**
**in that** the straightening zone is designed to be run through by metal strands (2) that have the cross section of a billet or the cross section of a bloom.

12. Straightening zone according to Claim 10 or 11,
**characterized**
**in that** the supporting framework (12) has next to one another a number of receptacles (15) for a withdrawal and straightening unit (6) respectively, so that by means of the straightening zone a number of metal strands (2) can be simultaneously straightened.

13. Straightening zone according to Claims 10 to 12,
**characterized**
**in that**, for each metal strand (2), at least one of the withdrawal and straightening units (6) is designed to carry out a cross-sectional reduction of the metal strand (2), in particular a soft reduction.

14. Straightening zone according to one of Claims 10 to 13,
**characterized**
**in that**, for each metal strand (2), the number of receptacles (15) in which no withdrawal and straightening unit is arranged is equal to 1.

15. Continuous casting plant,
- wherein the continuous casting plant has a number of continuous casting moulds (1), by means of which a corresponding number of metal strands (2) are cast,
- the continuous casting plant has a corresponding number of curved guides (3), by means of which the metal strands (2) are withdrawn substantially vertically downwards out of the respective continuous casting mould (1),
- wherein the continuous casting plant has a straightening zone (5) according to one of Claims 10 to 14, which is arranged downstream of the curved guides (3) and to which the metal strands (2) are fed by the curved guides (3).

## Revendications

1. Procédé de fonctionnement d'une installation de coulée continue,
- dans lequel un nombre de lingotières de coulée continue (1) permettent de couler un nombre correspondant de barres métalliques (2),
- dans lequel les barres métalliques (2) sont extraites de la lingotière de coulée continue (1) respective dans le sens essentiellement vertical vers le bas et sont amenées à une ligne de dressage (5) par un dispositif de guidage courbe (3) respectif,
- dans lequel les barres métalliques (2) traversent un nombre de redresseurs-entraîneurs (6) dans la ligne de dressage (5),
- dans lequel les redresseurs-entraîneurs (6) sont disposés dans un cadre porteur (12) qui, vu dans la direction de transport (x) des barres métalliques (2), comprend pour chaque barre métallique (2) respectivement un nombre de logements (15) agencés les uns derrière les autres destinés chacun à un redresseur-entraîneur (6),
**caractérisé en ce que**,
pour chaque barre métallique (2), il y a soit un nombre de logements antérieurs (15), dont celui qui est situé le plus en avant est contigu au dispositif de guidage courbe (3) respectif, soit un nombre de logements postérieurs (15), qui sont les plus éloignés du dispositif de guidage courbe (3) respectif, qui ne contient aucun redresseur-entraîneur, et un redresseur-entraîneur (6) n'est présent à chaque fois que dans les logements (15) restants.

2. Procédé de fonctionnement selon la revendication 1,
**caractérisé en ce que**
les barres métalliques (2) ont une section transversale de billette ou une section transversale de bloom.

3. Procédé de fonctionnement selon la revendication 1 ou 2,
**caractérisé en ce que**
le nombre de barres métalliques (2) est supérieur à 1.

4. Procédé de fonctionnement selon l'une des revendications 1 à 3,
**caractérisé en ce que**
la solidification de la barre métallique (2) et la position de la pointe d'un cône liquide de la barre métallique (2) sont calculées au moyen d'un modèle mathématique pendant le fonctionnement courant de l'installation de coulée continue.

5. Procédé de fonctionnement selon l'une des revendications 1 à 4,
**caractérisé en ce que**,
pour chaque barre métallique (2), au moins un des redresseurs-entraîneurs (6) effectue une réduction de section transversale de la barre métallique (2), notamment une réduction douce.

6. Procédé de fonctionnement selon la revendication 5,
**caractérisé en ce que**
l'au moins un redresseur-entraîneur (6) est choisi dans le nombre des redresseurs-entraîneurs (6) en tenant compte de la position de la pointe du cône liquide, est mis en place sur la barre métallique (2), de préférence avec un réglage de position, et effectue une réduction de section transversale, notamment une réduction du noyau liquide ou une réduction douce, de la barre métallique (2).

7. Procédé de fonctionnement selon l'une des revendications précédentes,
**caractérisé en ce que**,
pour chaque barre métallique (2), le nombre de logements (15) qui ne contient aucun redresseur-entraîneur est égal à 1.

8. Procédé de fonctionnement selon l'une des revendications précédentes,
**caractérisé en ce**
**qu'**un redresseur-entraîneur (6) est retiré de l'un des logements antérieurs (15) et est placé dans un des logements postérieurs (15) avant une augmentation de la vitesse d'une coulée.

9. Procédé de fonctionnement selon l'une des revendications précédentes,
**caractérisé en ce**
**qu'**un redresseur-entraîneur (6) est retiré de l'un des logements postérieurs (15) et est placé dans un des logements antérieurs (15) avant une réduction de la vitesse d'une coulée.

10. Ligne de dressage pour une installation de coulée continue permettant de couler un nombre de barres métalliques (2),
- la ligne de dressage comprenant un nombre de redresseurs-entraîneurs (6) qui sont conçus pour être traversés par les barres métalliques (2) après leur sortie d'un dispositif de guidage courbe (3) respectif de l'installation de coulée continue,
- la ligne de dressage comprenant un cadre porteur (12) dans lequel les redresseurs-entraîneurs (6) sont disposés,
- le cadre porteur (12), vu dans la direction de transport (x) des barres métalliques (2), comprenant pour chaque barre métallique (2) respectivement un nombre de logements (15) agencés les uns derrière les autres destinés chacun à un redresseur-entraîneur (6),
**caractérisée en ce que**,
lorsque la ligne de dressage est dans un état prêt à fonctionner, il y a, pour chaque barre métallique (2), soit un nombre de logements antérieurs (15), dont celui qui est situé le plus en avant est contigu au dispositif de guidage courbe (3) respectif, soit un nombre de logements postérieurs (15), qui sont les plus éloignés du dispositif de guidage courbe (3) respectif, qui ne contient aucun redresseur-entraîneur, mais un redresseur-entraîneur (6) est par contre présent à chaque fois dans les logements (15) restants.

11. Ligne de dressage selon la revendication 10,
**caractérisée en ce que**
la ligne de dressage est conçue pour être traversée par des barres métalliques (2) qui ont une section transversale de billette ou une section transversale de bloom.

12. Ligne de dressage selon la revendication 10 ou 11,
**caractérisée en ce que**
le cadre porteur (12) comprend plusieurs logements (15) cote à cote destinés chacun à un redresseur-entraîneur (6), de façon que plusieurs barres métalliques (2) puissent être dressées rectilignes simultanément au moyen de la ligne de dressage.

13. Ligne de dressage selon les revendications 10 à 12,
**caractérisée en ce que**,
pour chaque barre métallique (2), au moins un des redresseurs-entraîneurs (6) est conçu pour effectuer une réduction de la section transversale de la barre métallique (2), notamment une réduction douce.

14. Ligne de dressage selon l'une des revendications 10 à 13,
**caractérisée en ce que**,
pour chaque barre métallique (2), le nombre de logements (15) qui ne contient aucun redresseur-entraîneur est égal à 1.

15. Installation de coulée continue,
- l'installation de coulée continue comprenant un nombre de lingotières de coulée continue (1) qui permettent de couler un nombre correspondant de barres métalliques (2),
- l'installation de coulée continue comprenant un nombre correspondant de dispositifs de guidage courbes (3) au moyen desquels les barres métalliques (2) sont extraites de la lingotière de coulée continue (1) respective dans le sens essentiellement vertical vers le bas,
- l'installation de coulée continue comprenant une ligne de dressage (5) selon l'une des revendications 10 à 14 disposée après les dispositifs de guidage courbes (3) et à laquelle les barres métalliques (2) sont amenées par les dispositifs de guidage courbes (3).
